# EUROPEAN PATENT APPLICATION

(11) **EP 4 815 412 A2**
(43) Date of publication of application: **30.09.2026**
(21) Application number: 26162128.8
(22) Date of filing: 03.03.2026
(51) Int. Cl.: H04L 69/40, H04W 12/04, H04L 67/1095, H04W 4/50, H04W 4/70, H04W 12/30, H04W 12/40

(54) **PROCESS FOR MIGRATION OF AN INTERNET OF THINGS (IOT) DEVICE**

(30) Priority: 24.03.2025 DE 102025111334
(71) Applicant: Giesecke+Devrient Mobile Security Germany GmbH, 81677 München (DE)
(72) Inventor: DIETZE, Claus, 81677 München (DE); HUMPISCH, Jens, 81677 München (DE)
(74) Representative: Giesecke+Devrient IP

(57) **Abstract**

Process for migration of an Internet of Things (IoT) device, namely an eUICC device, from a first eSIM IoT Remote Manager (eIM1) to a second eSIM IoT Remote Manager (eIM2), said process comprising:
a) the step of providing an eUICC device, in which the configuration data of a first eSIM IoT Remote Manager (eIM1) are added; and providing an IoT Profile Assistant (IPA);
b) the step of providing the eUICC device with a specific key, said key being usable for carrying out a protected operation with the capability to delete the configuration data of the first eSIM IoT Remote Manager (eIM1) within the eUICC by an eligible entity;
c) the step of triggering the IoT Profile Assistant (IPA) to perform a protected eUICC Memory Reset operation, thereby deleting the configuration data of the first eSIM IoT Remote Manager (eIM1) within the eUICC and optionally creating a new, second eSIM IoT Remote Manager (eIM2) within the eUICC.

## Description

The invention pertains to a process for migration of an Internet of Things (IoT) device.

The GSMA SGP.22 specification is aimed at consumer devices such as smartphones and wearables. These devices typically have a user interface and rely on a "pull" mechanism for eSIM management. This model allows end-users to initiate and control eSIM profile downloads and swaps, usually via a user-friendly interface.

The GSMA SGP.02 specification is designed for machine-to-machine (M2M)/IoT applications and devices that often lack a traditional user interface - often referred to as "headless" devices. These devices, such as industrial sensors or smart meters, operate autonomously and require a "push" mechanism, where configuration and profile updates are triggered by a central management system. However, due to its reliance on SMS-based communication, SGP.02 is unable to support all the high-speed, high-efficiency demands of an increasingly connected IoT ecosystem.

The GSMA SGP.32 specification is a new remote provisioning specification that was released by the GSMA in May 2023. Technologically, it is not too different from the SGP.22 consumer specification; however, from a deployment perspective it is designed for headless M2M/IoT applications. The SGP.32 specification facilitates the remote loading, activation, and management of eSIM subscriptions for IoT devices in the field. Moving away from the SMS-based or https-based communication of its predecessor, SGP.32 employs a faster, more reliable IP-based protocol. This shift enhances the efficiency of managing IoT devices and provides a more flexible approach to cellular connectivity management across the device's life cycle. A further reason for introducing SGP.32 was to enable Remote SIM Provisioning (RSP) via constrained network protocols that are optimized for low data rates and energy efficiency. The SGP.32 specification also has the potential to drastically reduce operational costs and enable rapid scaling across different regions, bolstered by the integration of globally pre-connected stock-keeping units (SKUs), which streamline the deployment process for a vast range of IoT devices. SGP.32 specifies the roles and interfaces associated with the Remote SIM Provisioning and Management with the IoT Profile Assistant (IPA) in the IoT Device or associated with the Remote SIM Provisioning and Management with the IPA in the eUICC. The eSIM IoT Remote Manager (eIM) is the entity performing remote management of the eSIM or remote management of eIM configuration data in a device compliant with SGP.32. The SGP.32 specification supports the management of multiple eIMs per eUICC. The provisioning of SIM functionality is achieved by means of downloading, installing and enabling a profile in an eUICC, i.e. a security module of an IoT device. The profile consists of file structure, data and applications (e.g. applets) that, together with the eUICC, function like a physical SIM card.

There is no standardized solution that allows easy migration of relevant data from one eSIM IoT Remote Manager (eIM) to another eSIM IoT Remote Manager (eIM). In addition, the eUICC does not verify whether the "eUICC Memory Reset" function defined in GSMA SGP.32, V1.2, chapter 5.9.5, is authentic and authorized to delete all eSIM IoT Remote Manager (eIM) configuration data within the eUICC. Malicious or unauthorized entities, in particular Internet of Things (IoT) Profile Assistants (IPAs), could use this command to disconnect all IoT devices from the associated eSIM IoT Remote Managers (eIMs).

The present invention addresses the above object by the subject-matter covered by the independent claims. Preferred embodiments of the invention are defined in the dependent claims.

### SUMMARY OF THE INVENTION

1. (First aspect of the invention) Process for migration of an Internet of Things (IoT) device, namely an eUICC device, from a first eSIM IoT Remote Manager (eIM1) to a second eSIM IoT Remote Manager (eIM2), said process comprising:
   a) the step of providing an eUICC device, in which the configuration data of a first eSIM IoT Remote Manager (eIM1) are added; and providing an IoT Profile Assistant (IPA);
   b) the step of providing the eUICC device with a specific key, said key being usable for carrying out a protected operation with the capability to delete the configuration data of the first eSIM IoT Remote Manager (eIM1) within the eUICC by an eligible entity;
   c) the step of triggering the IoT Profile Assistant (IPA) to perform a protected eUICC Memory Reset operation, thereby deleting the configuration data of the first eSIM IoT Remote Manager (eIM1) within the eUICC and optionally creating a new, second eSIM IoT Remote Manager (eIM2) within the eUICC.
2. (Second aspect of the invention) Process for migration of an Internet of Things (IoT) device, namely an eUICC device, from a first eSIM IoT Remote Manager (eIM1) to a second eSIM IoT Remote Manager (eIM2), said process comprising:
   a) the step of providing an eUICC device, in which (i) the configuration data of a first eSIM IoT Remote Manager (eIM1) and (ii) the configuration data of a Backup eSIM IoT Remote Manager (BeIM) are added, said Backup eSIM IoT Remote Manager (BeIM) being configured such that it is associated with the first eSIM IoT Remote Manager (eIM1), wherein a synchronization of the first eSIM IoT Remote Manager (eIM1) and the Backup eSIM IoT Remote Manager (BeIM) is continuously performed using a so-called ESep interface; and providing an IoT Profile Assistant (IPA);
   b) the step of migration by synchronizing data between the first eSIM IoT Remote Manager (eIM1) and a second eSIM IoT Remote Manager (eIM2), wherein said step of migration is triggered by the IoT Profile Assistant (IPA) which initiates the communication with the first eSIM IoT Remote Manager (eIM1) or said step of migration is triggered by the first eSIM IoT Remote Manager (eIM1) as an initial trigger which triggers the IoT Profile Assistant (IPA) to initiate the migration, wherein it is detected that a connection with the first eSIM IoT Remote Manager (eIM1) can be established; and/or
   c) the step of migration by synchronizing data between the Backup eSIM IoT Remote Manager (BeIM) and a second eSIM IoT Remote Manager (eIM2), wherein said step of migration is triggered by the IoT Profile Assistant (IPA) which, after having initiated the communication with the first eSIM IoT Remote Manager (eIM1) and detecting that a connection with the first eSIM IoT Remote Manager (eIM1) cannot be established, initiates the communication with the Backup eSIM IoT Remote Manager (BeIM).
3. (Preferred embodiment) Process for migration of an Internet of Things (IoT) device according to clause 2, wherein the Backup eSIM IoT Remote Manager (BeIM) is configured in such a manner that the Backup eSIM IoT Remote Manager (BeIM) configuration data cannot be deleted by a standard eUICC Memory Reset function defined in GSMA SGP.32, V1.2, chapter 5.9.5.
4. (Preferred embodiment) Process for migration of an Internet of Things (IoT) device according to clause 3 or 4, wherein the Backup eSIM IoT Remote Manager (BeIM) is configured in such a manner that the Backup eSIM IoT Remote Manager (BeIM) can be distinguished from a regular eSIM IoT Remote Manager (eIM).
5. (Third aspect of the invention) Process for migration of an Internet of Things (IoT) device, namely an eUICC device, from a first eSIM IoT Remote Manager (eIM1) to a second eSIM IoT Remote Manager (eIM2), said process comprising:
   a) the step of providing an eUICC device, in which (i) the configuration data of a first eSIM IoT Remote Manager (eIM1) and (ii) the configuration data of a second eSIM IoT Remote Manager (eIM2) are added; and providing an IoT Profile Assistant (IPA);
   b) the step in which the eUICC checks which eSIM IoT Remote Manager (eIM) is supposed to be informed, when one of the eSIM IoT Remote Managers (eIMs) has to perform one or more Profile State Management Operations (PSMOs), wherein an indication in the configuration data of each associated eSIM IoT Remote Manager (eIM) indicates whether the respective eSIM IoT Remote Manager (eIM) has to be kept in synchronization;
   c) the step in which the eUICC verifies which eSIM IoT Remote Manager (eIM) has the indication and in which the eUICC generates the notifications for each eSIM IoT Remote Manager (eIM) that needs to be kept in synchronization;
   d) the step in which the IoT Profile Assistant (IPA) retrieves all generated notifications and sends said notifications to all relevant eSIM IoT Remote Managers (eIMs) that are kept in synchronization.

### DESCRIPTION OF THE PREFERRED EMBODIMENTS

The present invention ensures and simplifies migration of an IoT device and eUICC data from one eSIM IoT Remote Manager (eIM) to another. In addition, the present invention provides a protection of the eUICC Memory Reset function defined in GSMA SGP.32 to prevent an unauthorized deletion of eSIM IoT Remote Manager (eIM) data. Further, the present invention provides a backup eSIM IoT Remote Manager (eIM) that remains available on the respective eUICC at all times and that cannot be deleted by using the standard eUICC Memory Reset function.

Further aspects, features and advantages of the present invention will become apparent to those of ordinary skills in the art upon reviewing the following detailed description of preferred embodiments and variants of the present invention in conjunction with the accompanying figures.

Reference will now be made to the accompanying figures, in which:
FIG. 1 shows a workaround method according to the prior art, in which an existing eSIM IoT Remote Manager (eIM) adds configuration data of a new eSIM IoT Remote Manager (eIM) in all IoT devices and the old or new eSIM IoT Remote Manager (eIM) deletes the configuration data of the old eSIM IoT Remote Manager (eIM).
Fig. 2 shows the drawbacks of the workaround method according to the prior art;
Fig. 3 shows the inventive method of the present invention according to a first embodiment;
Fig. 4 shows the inventive method of the present invention according to a second embodiment;
Fig. 5 shows the inventive method of the present invention according to a third embodiment;
Fig. 6 shows, for explanatory reasons in order to facilitate the understanding of the present invention, an eSIM IoT functional architecture (IPA in the IoT device) as described in GSMA SGP.32, v1.2.

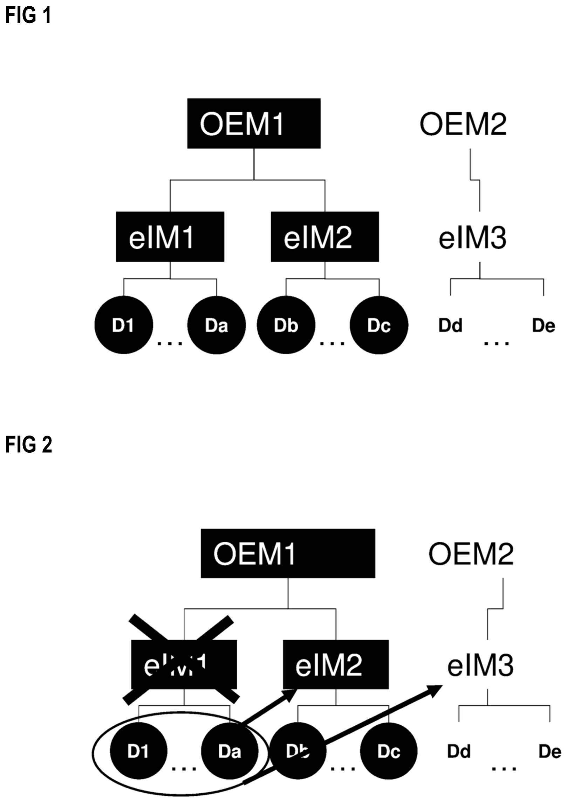

According to the prior art shown in Fig. 1 there so far is no standardized solution which covers the following cases:
- A respective eSIM IoT Remote Manager "x" (eIMx) is not reachable and is permanently disconnected, i.e. eIMx stops all operations. In this case, eIM services of an installed IoT device are taken over by another eIM. The IoT devices which are connected to an eSIM IoT Remote Manager (eIM) need to be moved to another eSIM IoT Remote Manager (eIM).
- An eSIM IoT Remote Manager (eIM) moves from a first Original Equipment Manufacturer (OEM1) to another Original Equipment Manufacturer (OEM2). In this case, eSIM IoT Remote Manager (eIM) configuration data need to be updated for a complete fleet of IoT devices.

According to the prior art a workaround resides in a method, in which an existing eSIM IoT Remote Manager (eIM) adds the configuration data of a new eSIM IoT Remote Manager (eIM) in all IoT devices and the old or new eSIM IoT Remote Manager (eIM) deletes the configuration data of the old eSIM IoT Remote Manager (eIM).

Fig. 2 shows the drawbacks of the workaround method according to the prior art:
- If a respective eSIM IoT Remote Manager (eIM1) is not reachable, then eIM1 cannot send eIM Configuration Operation (eCO) commands to add an eSIM IoT Remote Manager (eIM2) or an eSIM IoT Remote Manager (eIM3).
- As long as IoT devices are offline, they cannot be updated and a respective eSIM IoT Remote Manager (eIM1) would have to remain available and operational until all, or a large enough percentage of, IoT devices D1...Da have been updated.

Hence, transferring the full fleet of IoT devices takes a long time, requires the addition and deletion of eSIM IoT Remote Manager (eIM) data on each eUICC and is not possible, if the only associated eSIM IoT Remote Manager (eIM) is not reachable, e.g. since the eIM has stopped the operation.

A standardized solution might be the following one:
- An IoT Profile Assistant (IPA) sends an "eUICC Memory Reset" command which deletes all eSIM IoT Remote Manager (eIM) configuration data within the eUICC. The IoT Profile Assistant (IPA) can then add a new eSIM IoT Remote Manager (eIM), namely by means of an "add Initial eIM" command.

The drawbacks of the above-mentioned standardized solution are the following ones:
- An eIM Configuration Operation (eCO) residing in an "eUICC Memory Reset" function with the capability to delete can be optionally supported. It might be the case that, for security reasons, the "eUICC Memory Reset" function is not supported by the respective eUICC.
- An IoT Profile Assistant (IPA) needs to be triggered to perform the deletion of an eIM and addition of a new eIM. Such an operation is not protected, i.e. if supported by the eUICC, any IoT Profile Assistant (IPA) is able to delete existing eIMs and create new eIMs.
- A synchronization of data between eIMs is not covered.

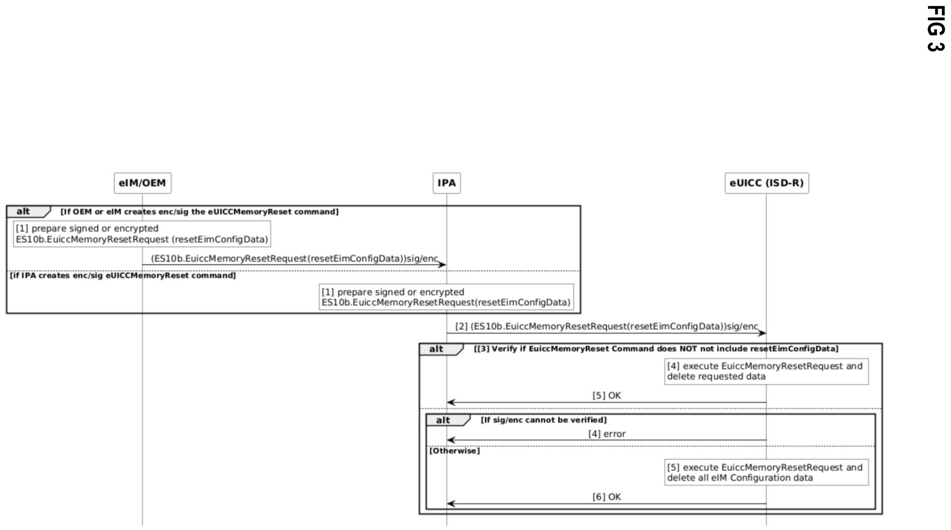

Fig. 3 shows the inventive method of the present invention according to a first embodiment, namely a protected "eUICC Memory Reset" function. The concept resides in the idea that a specific key is configured within the eUICC and is available to the Original Equipment Manufacturer (OEM). This key can be used only for eIM configuration data deletion via the "eUICC Memory Reset" command.

The advantage resides in a protected execution of eIM configuration data deletion using the "eUICC Memory Reset" function.

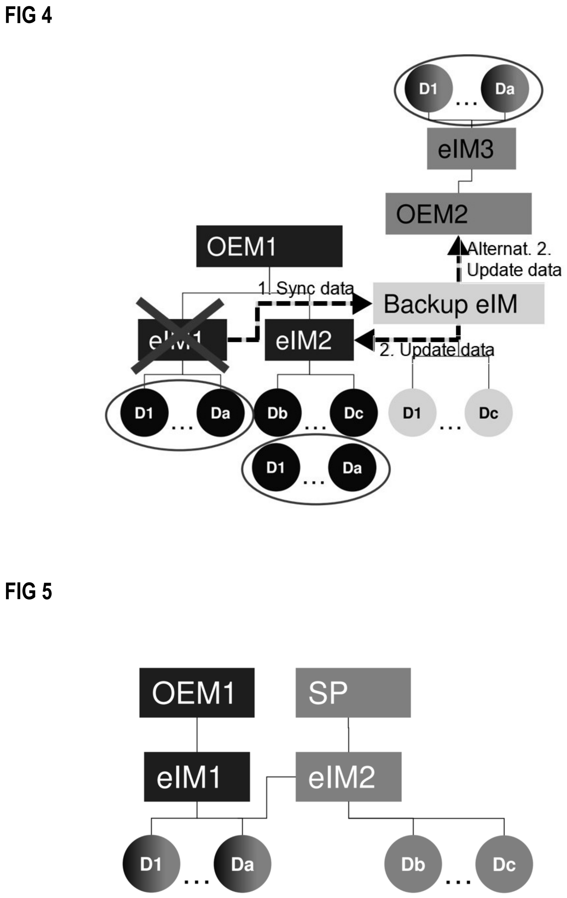

Fig. 4 shows the inventive method of the present invention according to a second embodiment, namely a "Backup and synchronization eIM" method. The concept comprises the following features:
- The method is applicable for an eIM package retrieval scenario as defined in the GSMA SGP.32 specification.
- Each IoT device, i.e. eUICC device, has at least one additional "Backup eIM" (BeIM) which is configured as an associated eIM. This configuration happens either at the same step when eIM1 is associated or at a different point in time, e.g. during IoT device production or during the lifetime of the eUICC, e.g. using Over The Air (OTA).
- If the IoT Profile Assistant (IPA) initiates the communication with eIM1 and detects a connection that cannot be established, it automatically switches to BeIM.
- A synchronization of eIM1 and BeIM is continuously performed using the ESep interface between the two entities.
- The BeIM performs the actions that cannot be done by eIM1, since eIM1 is not available, and the BeIM is able to migrate IoT devices and synchronize data between eIM1 and eIM2 and/or eIM3, if requested.
- The BeIM must be capable of performing an eIM Configuration Operation (eCO). The BeIM may or may not support Profile State Management Operation (PSMO) as defined in GSMA SGP.31 specification and other features such as indirect profile download - in that case the BeIM acts as a second full eIM.

Preferred extensions are the following ones:
- An "eUICC Memory Reset" function, if supported in the respective eUICC, must not delete the Backup eIM configuration data.
- The Backup eIM has specific characteristics which enable the BeIM to be distinguished from a regular eIM.
- A dedicated new command to manage BeIM configuration data can be provided, e.g. "delete BeIM" command.

The above-mentioned inventive method of the present invention according to the second embodiment has the following advantages:
- At least one eIM is always available.
- An "eUICC Memory Reset" is not required to establish a relation of all IoT devices to a new eIM.
- All configurations are protected using regular eIM Configuation Operations (eCOs).
- Synchronization and migration of fleets of IoT devices from one eIM to another eIM is enabled.

Fig. 5 shows the inventive method of the present invention according to a third embodiment, namely a "eUICC initiated synchronization of data on multiple eIMs" method. The concept comprises the following features:
- IoT devices D1...Da are connected to more than one eSIM IoT Remote Manager (eIM).
- When one of the eIMs performs one or more Profile State Management Operations (PSMOs) as defined in GSMA SGP.31 specification on IoT devices D1...Da, the eUICC checks which eIM is supposed to be informed and generates notifications for each associated eIM. In particular, a flag or characteristic is associated with each associated eIM within its eIM configuration data to indicate whether that eIM has to be kept in synchronization (synchronization requirement).
- The IoT Profile Assistant (IPA) requests the eIM configuration data from the eUICC, i.e. all eIMs, and determines whether more than one eIM is associated and is configured. If yes, the IoT Profile Assistant (IPA) retrieves all generated notifications and sends them to all relevant eIMs that have the synchronization requirement set.

A preferred extension is the following one:
- The eIM configuration data can comprise a flag or characteristic which indicates whether the respective eIM must be notified or not.

The above-mentioned inventive method of the present invention according to the third embodiment has the following advantage:
- All eIMs are up to date, no communication interface between the different eIMs is needed to synchronize data between them.

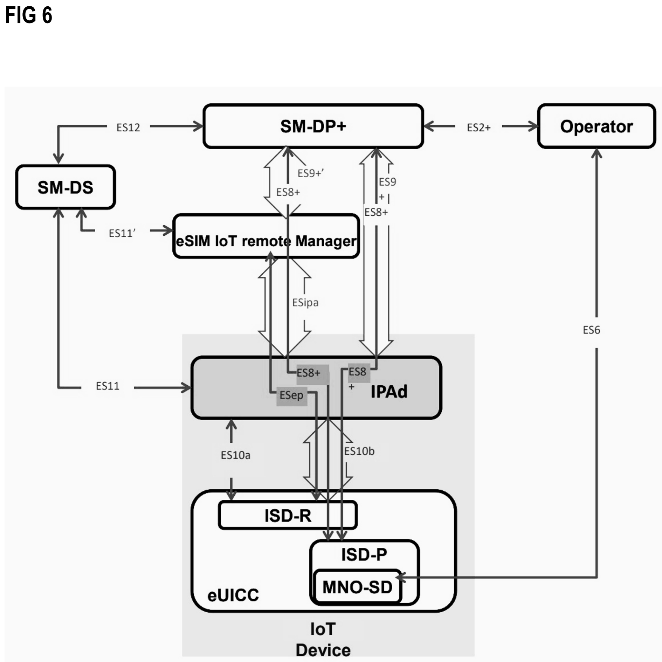

Fig. 6 shows, for explanatory reasons in order to facilitate the understanding of the present invention, an eSIM IoT functional architecture (IPA in the IoT device) as described in GSMA SGP.32, v1.2., Figure 1 on page 14.

### Abbreviations:

- SM-DP+: Subscription Manager data Preparation (as defined in SGP.22 version 2.5)
- SM-DS: Subscription Manager Discovery Server (as defined in SGP.22 version 2.5)
- Operator: Operator (as defined in SGP.22 version 2.5)

- IPAd: IoT Profile Assistant in the IoT Device
- ISD-R: Issuer Security Domain - Root
- ISD-P: Issuer Security Domain - Profile
- MNO-SD: Mobile Network Operator - Security Domain
- eUICC: embedded UICC, i.e. a removable or non-removable UICC which enables the remote and/or local management of Profiles in a secure way (as defined in SGP.22 version 2.5)

## Claims

1. Process for migration of an Internet of Things (IoT) device, namely an eUICC device, from a first eSIM IoT Remote Manager (eIM1) to a second eSIM IoT Remote Manager (eIM2), said process comprising:
a) the step of providing an eUICC device, in which the configuration data of a first eSIM IoT Remote Manager (eIM1) are added; and providing an IoT Profile Assistant (IPA);
b) the step of providing the eUICC device with a specific key, said key being usable for carrying out a protected operation with the capability to delete the configuration data of the first eSIM IoT Remote Manager (eIM1) within the eUICC by an eligible entity;
c) the step of triggering the IoT Profile Assistant (IPA) to perform a protected eUICC Memory Reset operation, thereby deleting the configuration data of the first eSIM IoT Remote Manager (eIM1) within the eUICC and optionally creating a new, second eSIM IoT Remote Manager (eIM2) within the eUICC.

2. Process for migration of an Internet of Things (IoT) device, namely an eUICC device, from a first eSIM IoT Remote Manager (eIM1) to a second eSIM IoT Remote Manager (eIM2), said process comprising:
a) the step of providing an eUICC device, in which (i) the configuration data of a first eSIM IoT Remote Manager (eIM1) and (ii) the configuration data of a Backup eSIM IoT Remote Manager (BeIM) are added, said Backup eSIM IoT Remote Manager (BeIM) being configured such that it is associated with the first eSIM IoT Remote Manager (eIM1), wherein a synchronization of the first eSIM IoT Remote Manager (eIM1) and the Backup eSIM IoT Remote Manager (BeIM) is continuously performed using a so-called ESep interface; and providing an IoT Profile Assistant (IPA);
b) the step of migration by synchronizing data between the first eSIM IoT Remote Manager (eIM1) and a second eSIM IoT Remote Manager (eIM2), wherein said step of migration is triggered by the IoT Profile Assistant (IPA) which initiates the communication with the first eSIM IoT Remote Manager (eIM1) or said step of migration is triggered by the first eSIM IoT Remote Manager (eIM1) as an initial trigger which triggers the IoT Profile Assistant (IPA) to initiate the migration, wherein it is detected that a connection with the first eSIM IoT Remote Manager (eIM1) can be established; and/or
c) the step of migration by synchronizing data between the Backup eSIM IoT Remote Manager (BeIM) and a second eSIM IoT Remote Manager (eIM2), wherein said step of migration is triggered by the IoT Profile Assistant (IPA) which, after having initiated the communication with the first eSIM IoT Remote Manager (eIM1) and detecting that a connection with the first eSIM IoT Remote Manager (eIM1) cannot be established, initiates the communication with the Backup eSIM IoT Remote Manager (BeIM).

3. Process for migration of an Internet of Things (IoT) device according to claim 2, wherein the Backup eSIM IoT Remote Manager (BeIM) is configured in such a manner that the Backup eSIM IoT Remote Manager (BeIM) configuration data cannot be deleted by a standard eUICC Memory Reset function defined in GSMA SGP.32, V1.2, chapter 5.9.5.

4. Process for migration of an Internet of Things (IoT) device according to claim 3 or 4, wherein the Backup eSIM IoT Remote Manager (BeIM) is configured in such a manner that the Backup eSIM IoT Remote Manager (BeIM) can be distinguished from a regular eSIM IoT Remote Manager (eIM).

5. Process for migration of an Internet of Things (IoT) device, namely an eUICC device, from a first eSIM IoT Remote Manager (eIM1) to a second eSIM IoT Remote Manager (eIM2), said process comprising:
a) the step of providing an eUICC device, in which (i) the configuration data of a first eSIM IoT Remote Manager (eIM1) and (ii) the configuration data of a second eSIM IoT Remote Manager (eIM2) are added; and providing an IoT Profile Assistant (IPA);
b) the step in which the eUICC checks which eSIM IoT Remote Manager (eIM) is supposed to be informed, when one of the eSIM IoT Remote Managers (eIMs) has to perform one or more Profile State Management Operations (PSMOs), wherein an indication in the configuration data of each associated eSIM IoT Remote Manager (eIM) indicates whether the respective eSIM IoT Remote Manager (eIM) has to be kept in synchronization;
c) the step in which the eUICC verifies which eSIM IoT Remote Manager (eIM) has the indication and in which the eUICC generates the notifications for each eSIM IoT Remote Manager (eIM) that needs to be kept in synchronization;
d) the step in which the IoT Profile Assistant (IPA) retrieves all generated notifications and sends said notifications to all relevant eSIM IoT Remote Managers (eIMs) that are kept in synchronization.
